# EUROPEAN PATENT SPECIFICATION

(11) **EP 3 789 936 B1**
(45) Date of publication and mention of the grant of the patent: **22.10.2025**
(21) Application number: 20204390.7
(22) Date of filing: 25.02.2011
(51) Int. Cl.: G06Q 10/00, G06Q 10/06, G06Q 40/08

(54) **SYSTEM AND METHOD FOR ESTIMATING COLLISION DAMAGE TO A CAR**
SYSTEM UND VERFAHREN ZUR KALKULATION VON KOLLISIONSSCHÄDEN BEI EINEM FAHRZEUG
SYSTÈME ET PROCÉDÉ D'ESTIMATION DES DOMMAGES PAR COLLISION SUR UNE VOITURE

(43) Date of publication of application: 10.03.2021
(62) Divisional of application: 11707558.0
(73) Proprietor: Audatex GmbH, 6362 Stansstad (CH)
(72) Inventor: Alarcón Alcolea Juan, José, Madrid (ES); González Miranda Jorge, Fernando, Valladolid (ES)
(74) Representative: Rentsch Partner AG

(56) References cited:
- EP-A1- 1 215 612
- EP-A1- 1 306 322
- EP-A1- 1 640 228
- EP-A2- 0 982 673
- WO-A1-2006/047266
- JP-A- 2000 148 857
- JP-A- 2000 222 458
- JP-A- H09 309 416
- JP-A- H1 173 456
- US-A- 5 128 859
- US-A- 5 317 503
- US-A- 5 432 904
- US-B1- 6 381 561
- US-B1- 6 397 131

## Description

### Field of the Invention

The present invention relates to a system and a method for determining an estimate of collision damage to a car. Specifically, the present invention relates to a computer system and a computer-implemented method for determining an estimate of the collision damage to a car using a user interface to display a body part of the car.

### Background of the Invention

Typically, for car repair facilities, car insurance firms and damage appraisers, it is necessary to obtain an appraisal of the damage to a car (i.e. an automobile) resulting from a collision. It is particularly important to determine efficiently and accurately an estimate of the collision damage, including the time and/or cost for repairing the damage to the car.

US2006/0114531 describes a vehicle inspection station that uses several cameras to capture images of a car. For detecting whether a car has damage, at least a portion of an image is compared with a previously stored image of the vehicle. However, the vehicle inspection station is not configured to assess the damage and/or provide an estimate for the repair of the damage.

US 5,839,112 describes a computerized insurance estimating system which can be used by automobile insurance appraisers and repair facilities to obtain information about parts, labor, and repair operations for automobile (car) repairs.

An application program displays various sections of the outer layer of the vehicle including body parts of the car, such as the rear bumper, doors, rear and front fenders, and the hood of the vehicle, or windows, such as the rear window or the windshield. By clicking on provided selection circles, the user selects one or more damaged vehicle parts. The estimate is based on the selected vehicle parts and cost data defining for each part its purchase price and the cost of the labor involved in replacing the part. The system is not configured, however, to determine in more detail the damage to individual parts of the car.

US 2004/0073434 describes a method and a system for estimating automobile damage that can be fixed through paintless dent repair, i.e. techniques for removing dents from the body of a motor vehicle when the paint is not damaged. Several vehicle parts are displayed in a user interface, and for each vehicle part a number of dents can be specified by the user. In addition, the size of the dents can be specified by the user by selecting one or more of the illustrated dent sizes. The information about the damage is communicated to a central computer, which generates a report including the repair costs for the vehicle. The system makes it possible to determine different levels of damage on body parts of a car, however, damage definition is limited to circular dents and a small number of given sizes.

EP0982673A2 discloses a vehicle repair cost estimating system. A memory stores division data as vehicle attribute data, the division data sets each region of a vehicle for dividing each of the regions into respective areas based on a predetermined condition and sets a repair condition corresponding to each of the areas. A calculating device specifies a damaged position of the vehicle, determines to which area set in each region the specified damaged position belongs, and calculates a repair cost based on repair condition data of the determined area.

### Summary of the Invention

It is an object of this invention to provide a computer system and a computer-implemented method for determining an estimate of collision damage to a car, which system and method do not have the disadvantages of the prior art. In particular, it is an object of the present invention to provide a computer system and a computer-implemented method for determining an estimate of collision damage to a car, particularly an estimate of costs and/or time for repairing the damage of the car, which system and method are not limited to quoting prices or labor costs for individual body parts of a car or pre-defined shapes, forms, and sizes of dents.

Claims 1, 9, 17 define the present invention. Preferred embodiments are defined by the dependent claims.

It should be stated that the term "car" is meant synonymously with terms such as "auto" or "automobile" and is to be understood broadly and intended to include other wheeled motor vehicles not limited to transporting passengers but also goods, particularly, light commercial vehicles (LCV). With the terms "body of a car" or "car body", reference is made to the outer shell or layer of an automobile which is exposed to collision through direct contact with an object external to the car. Accordingly, the terms "body part" or "part of body" of a car refer to components and panels of the exterior shell or layer of an automobile, including hoods, fenders, fascias, bumpers, grills, hatches, spoilers, door panels, door handles, trim, holms, etc. and also windows. The term "other car parts" or "further car parts" is used herein to refer to any internal component or part of the car which is not a member of the body of the car but is located inside the outer shell or layer of the automobile and is thus covered by the body or a body part of the car, respectively. The term "repair" is meant to include the mending of a damaged part as well as the replacement of the damaged part with a new part.

According to the present invention, the above-mentioned objects are achieved through the features of the independent claims. In addition, further advantageous embodiments follow from the dependent claims and the description.

According to the present invention, the above-mentioned objects are particularly achieved in that for determining an estimate of the collision damage to a car, a body part of the car is displayed in a user interface, through the user interface received from a user is input for defining on the body part an outline of at least one damaged area, the damaged area is drawn on the body part according to the defined outline, and an estimate of the repair cost and/or repair time is generated for the user, based on the damaged area drawn on the body part. Thus, the estimate of the collision damage to a car includes the estimated cost and/or time for repairing the collision damage as defined by one or more damaged areas defined and drawn on one or more body parts of the car. For example, received from the user through the user interface are selections of a car model and at least one body part of the car model, and the estimate is generated depending on the selected body part(s) of the selected car model. Providing a user interface for defining and drawing on a car body part the outline of one or more damaged areas, makes it possible for the user to define efficiently, flexibly, and accurately regions of a car body part that have been damaged and show a defect resulting from the collision. By enabling the user to define a damaged area or region by defining its boundary on the body part in the form of a closed line, e.g. as a freehand drawing or a set of line segments forming a polygon, the user interface makes it possible to define the collision damage efficiently, flexibly, and accurately on individual car body parts, without any limitations of the damaged areas to pre-defined shapes, forms or sizes.

According to the invention, an estimate of the repair time is generated for the user, a probability that another car part was damaged by the collision is determined, and items or operations are determined for repairing the collision damage, as set forth more specifically by the features of the independent claims.

Preferably, in the user interface a drawing tool is provided which enables the user to draw the outline of the damaged area on the body part. Thus, the damaged area is defined by an outline of the damaged area drawn on the body part by way of a drawing tool of the user interface. Accordingly, the drawing tool enables the user to enter through the user interface input in the form of drawing instructions for defining the outline and thus the boundary, form and shape of the damaged area or region on the body part.

In another embodiment, an image of the body part is received from the user and the outline of the damaged area is detected from the image of the body part. Accordingly, the user interface enables the user to enter the input for defining the outline of damaged areas in the form of photographs or digital images which are scanned or loaded into the computer system, respectively. Detecting the outline of the damaged area by way of an image processing outline detector makes it possible to define very efficiently and accurately the outline and thus the boundary, form and shape of the damaged area or region on the body part.

In an embodiment, the damaged area is positioned on the body part, in response to positioning instructions received from the user through the user interface. Depending on the embodiment and/or user instructions, the positioning instructions define an initial starting point, for drawing the outline of the damaged area, or a target location, to which the outline of the damaged area is moved.

In a preferred embodiment, for the damaged area drawn on the body part, an indication of an impact level is received from the user through the user interface, and the estimate is generated depending on the impact level for the damaged area. Defining the impact level for a damaged area makes it possible to specify efficiently and flexibly the severity and/or depth of the damage in the respective region of the body part.

In another preferred embodiment, determined are further parts of the car which are impacted by a damage of the body part as defined by the damaged area drawn on the body part, and the repair of these further parts is included in generating the estimate. Determining the collision damage to other car parts, which are covered by the body or a body part of the car, makes it possible to further increase the accuracy of the estimate of the collision damage.

In an embodiment, determined from a database are characteristics of the body part, including the thickness of the body part, the material of the body part and/or the repair accessibility of the body part, and these characteristics of the body part are included in generating the estimate. Considering characteristics such as the thickness, the material and repair accessibility of the body part makes it possible to further increase the accuracy of the estimate of the collision damage, as these characteristics have an influence on time and cost for repairing a body part, as well as on the probability or likelihood that another cart part, covered by the respective body part, was damaged through the collision.

In a further embodiment, procedures for repairing the collision damage are generated for the user, based on characteristics of the body part, the damage of the body part as defined by the damaged area drawn on the body part, and further parts of the car which are impacted by the damage of the body part as defined by the damaged area drawn on the body part.

In addition to the computer system and computer-implemented method for determining an estimate of the collision damage to a car, the present invention also relates to a computer program product comprising computer program code for controlling one or more processors of a computer system, preferably a computer program product comprising a tangible, non-transitory computer-readable medium having stored thereon the computer program code. The computer program code is configured to direct a computer system to execute the method of estimating collision damage to a car. Specifically, the computer program code is configured to direct a computer system for estimating collision damage to a car to display in a user interface a body part of the car, receive from a user through the user interface instructions for drawing on the body part at least one damaged area, draw the damaged area on the body part according to the instructions received from the user, and generate for the user an estimate of at least one of repair cost and repair time, based on the damaged area drawn on the body part.

### Brief Description of the Drawings

The present invention will be explained in more detail, by way of example, with reference to the drawings in which:
Figure 1 shows a block diagram illustrating schematically a computer system for determining an estimate of collision damage to a car.
Figure 2 shows a block diagram illustrating schematically a computer system implemented as a stand-alone unit for determining an estimate of collision damage to a car.
Figure 3 shows a block diagram illustrating schematically a computer system, comprising one or more communication terminals which are connected via a communication network to a central unit, for determining an estimate of collision damage to a car.
Figure 4 shows a flow diagram illustrating an exemplary sequence of steps for determining an estimate of collision damage to a car.
Figure 5 shows a flow diagram illustrating an exemplary sequence of steps for defining a damaged area on a body part of a car.
Figure 6 shows a flow diagram illustrating an exemplary sequence of steps for generating an estimate of collision damage to a car.
Figure 7 shows a flow diagram illustrating an exemplary sequence of steps for defining damaged areas on body parts of a car and generating an estimate of collision damage to the car.
Figures 8a and 8b illustrate a graphical user interface for defining damaged areas on body parts of a car and displaying an estimate of collision damage to the car including estimates of repair time and repair cost.
Figures 9a, 9b, and 9c illustrate a graphical user interface displaying a body part of a car, drawings of a damaged area on the body part with different levels of impact, and an estimate of collision damage including estimates of repair time and repair cost.
Figures 10a, 10b, and 10c illustrate a graphical user interface displaying a body part of a car, drawings of two damaged areas on the body part with different levels of impact, and an estimate of collision damage including estimates of repair time and repair cost.

### Detailed Description of the Preferred Embodiments

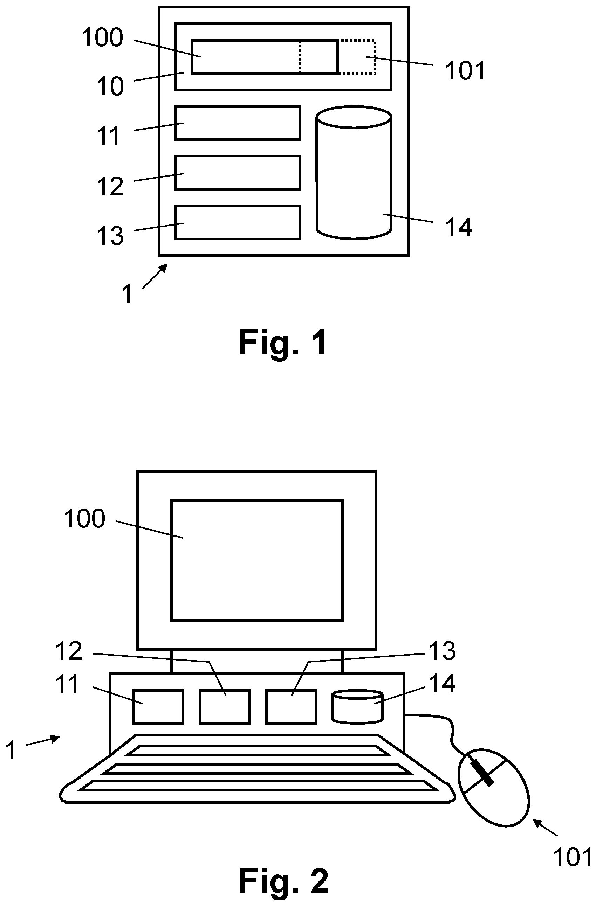

In Figures 1, 2, and 3, reference numeral 1 refers to a computer system for determining an estimate of collision damage to a car.

As illustrated in Figure 1, the computer system 1 comprises a user interface 10. The user interface 10 comprises a display with a graphical user interface 100 displayed thereon and data entry elements 101. Depending on the embodiment, the data entry elements 101 comprise one or more keys, a keyboard, and/or a pointing device such as a touch pad, a track ball or a computer mouse enabling the user to enter instructions for controlling on the display or graphical user interface 100, respectively, the location of a position indicator such as an arrow 107', a cursor, a pointer or another icon associated with a pointing tool 107 or a drawing tool 108, 108', respectively. Alternatively, the display is a touch or multi-touch sensitive display having integrated the data entry elements 101 in the display or graphical user interface 100, respectively.

As illustrated in Figure 1, the computer system 1 further comprises various functional modules including a control module 11, an estimator module 12, an operations generator 13, an optional outline detector 15, and a database 14.

The control module 11 is configured to control the user interface 10, specifically to generate and control the graphical user interface 100, receive user instructions (including commands and data) via the user interface 10, and display data (including alpha-/numerical data, graphical objects, and other visual still or animated objects) for the user on the display or graphical user interface 100, respectively.

The estimator module 12 is configured to generate for the user an estimate of the cost and/or time required for repairing the collision damage to a car, as will be explained later in more detail.

The operations generator 13 is configured to generate for the user procedures for performing work items or operations required for repairing the collision damage.

The outline detector 15 is configured to detect an outline or boundary of a damaged area on a body part of a car from a photo or digital image of the body part which is scanned or loaded into the computer system 1, respectively. The outline detector 15 includes image processing modules to generate the outline, e.g. by using edge detection and extraction algorithms to determine the boundary of damaged areas from digital image data.

Preferably, the functional modules are implemented as programmed software modules comprising computer code for controlling one or more processors of one or more computers. Preferably, the computer code is stored on a computer-readable medium which is connected to the one or more processors in a fixed or removable fashion. One skilled in the art will understand, however, that in alternative embodiments, the functional modules can be implemented fully or partly by way of hardware components, e.g. the outline detector 15 may include image processors for detecting the outline of one or more damaged areas from image data.

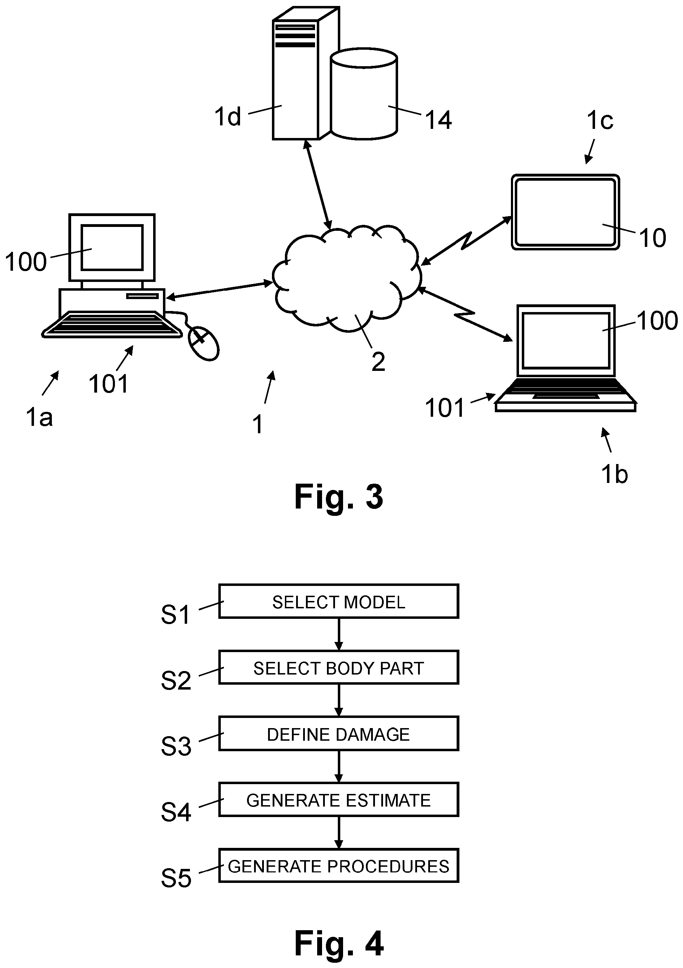

Depending on the embodiment, the computer system 1 is implemented as a stand-alone system, as illustrated in Figure 2, or as a distributed system, as illustrated in Figure 3.

In the stand-alone version of Figure 2, the computer system 1 is configured to operate independently of any external computers, servers or databases, and comprises one single computer which includes the functional modules, a display for the graphical user interface 100, data entry elements 101, and database 14. For example, the stand-alone version of computer system 1 is a fixed personal computer (PC), a mobile PC, or a (multi) touch-sensitive tablet PC such as an iPad^{®} (iPad is a registered trademark by Apple Inc.). In the stand-alone version, the computer system 1 is connected to a communication network 2 only for the purpose of updating its functional modules (software) or the contents of database 14.

In the distributed version of Figure 3, the computer system 1 comprises two or more computers: one computer is implemented as a communication terminal 1a, 1b, 1c, while the other computer is implemented as a server 1d. For example, the communication terminal is a fixed PC 1a, a mobile PC 1b, or a tablet PC 1c. As illustrated schematically in Figure 3, the communication terminal 1a, 1b, 1c is connected to the server 1d via a communication network 2. The communication network 2 comprises a fixed and/or mobile communication network, including a local area network (LAN), digital subscriber lines (xDSL), a mobile radio network such as the Global System for Mobile Communication (GSM) or the Universal Mobile Telecommunication System (UMTS), a wireless LAN (WLAN), and the Internet, etc. While the database 14 is located or connected to the server 1d, the user interface 10, including the display with the graphical user interface 100 and the data entry elements 101, is implemented at the communication terminals 1a, 1b, 1c. Depending on the embodiment, the estimator module 12, the operations generator 13 and/or the optional outline detector 15 are implemented and run on the server 1d or on the communication terminals 1a, 1b, 1c. Accordingly, the communication terminals 1a, 1b, 1c act as clients or web clients, whereas the server 1d acts as an application server, a database server, or a web server.

Preferably, the database 14 is implemented as a relational database and/or another electronic data storage/filing system with an indexed and/or hierarchical data organization and structure. The database 14 comprises data about specific car (automobile) models, including and distinguishing individually their various versions with different mechanical options. A car model is identified by brand and/or manufacturer name, model name, version number, and/or a unique identifier such as a model number. For each car model, the database 14 comprises data about the characteristics of all the parts of the body of the car, e.g. hoods, fenders, wheel housings, fascias, bumpers, grills, hatches, spoilers, door panels, door handles, trim, holms, etc. The data about the body parts of a car model include a body part name, a body part identifier, the material of the body part, and its shape and dimensions, particularly its thickness and paintable area, its location on/in the car, its relative position and distance to other car parts covered by or attached to the respective body part and/or to neighboring/adjacent body parts, and a graphical representation for visually rendering the body part 3. Furthermore, data about a body part includes repair accessibility information, i.e. data indicating whether or not, and if so to what extent and where, a body part or sections of the body part are accessible for repair of the collision damage, specifically, whether and where a panel beater, i.e. a auto body mechanic, can place a dolly on the rear side of the body part, facing the interior of the car, as a counter piece for planishing the damaged area of the body part, by using a hammer on the front side of the body part, facing the exterior of the car, or whether and where other, e.g. more time consuming, repair procedures are required. Depending on the embodiment, the data about a body part includes further part accessibility information indicating the body part's interdependence with neighboring or adjacent body parts and/or other car parts with regards to its removal, replacement and/or repair. Preferably, the database 14 further comprises for each car model data about other (internal) parts of the car including a part name, a part identifier, part material(s), its shape and dimensions, its location on the car, its relative position and distance to body parts which are attached to or cover the respective part, and/or part accessibility information indicating the respective part's interdependence with neighboring or adjacent body parts and/or other car parts with regards to its removal, replacement and/or repair. For the body parts 3 and other car parts, the database 14 further comprises pricing information indicating the current purchasing or replacement costs. The database 14 further comprises for the body parts and other car parts work items and operations including detailed procedures (including written text, pictures, and/or video sequences) and indications of materials required for repairing, through mending or replacement, damaged body parts or other car parts for various levels of damage or impact. The database 14 also includes information about the cost and/or time required for performing the individual work items, operations and/or procedures. In an embodiment, the database 14 also stores timing information indicating for the body parts 3 and other car parts in each case the duration of time required for its replacement. Moreover, the database 14 comprises for the body parts 3 the estimated time and/or costs required for (re-)painting the body part 3 or a defined area of the body part's surface.

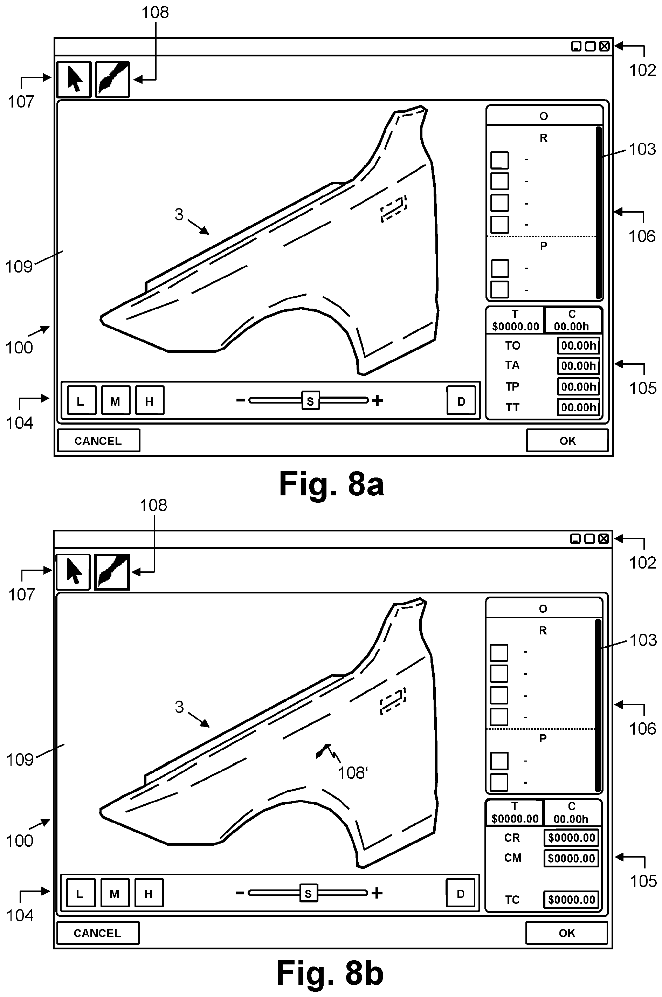

In the following paragraphs, described with reference to Figures 4, 5, 6, and 7, are possible sequences of steps performed by the computer system 1 or its functional modules, respectively, for defining collision damage to a car by determining an estimate of the collision damage with regards to estimated repair time and/or estimated repair costs. Further reference is made to Figures 8a, 8b, 9a, 9b, 9c, 10a, 10b, and 10c, illustrating the display with the graphical user interface 100 for defining the collision damage to the car and displaying the estimate of the collision damage.

In step S1, the user of the computer system 1 selects the model of the car with collision damage. In one embodiment, the user defines the model of the car by entering the car's manufacturer or brand, and selecting the specific model from a list which is retrieved by the computer system 1 from database 14 and provided to the user. In another embodiment, the user enters one or more search terms describing the model of the car, and selects or confirms the specific model in a matching query result returned by the computer system 1. Alternatively, the model of the car is determined by the computer system 1 based on a photo (digital image) of the car which is scanned or loaded into the computer system 1.

In step S2, for the car model defined in step S1, the user of the computer system 1 selects one or more body parts 3 which have been damaged in a collision, for example. In one embodiment, the control module 11 displays to the user, on the display or graphical user interface 100, respectively, a graphical representation of the car model and receives from the user instructions for selecting the body part(s) 3, e.g. by pointing and clicking, touching or other manipulations, depending on the type of user interface 10. Alternatively, the user selects the body part(s) 3 from a list, or the control module 11 uses image processing to identify damaged body parts 3 from one or more photos (digital images) of the damaged car or body parts 3 which are scanned or loaded into the computer system 1.

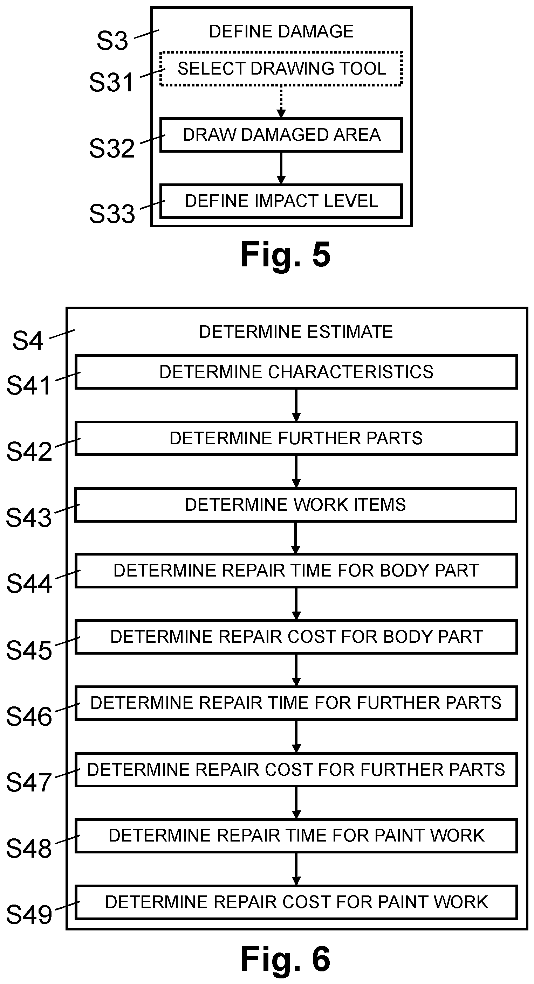

In step S3, the user of the computer system 1 defines through the user interface 10 the damage on the body part(s) 3 defined in step S2. Specifically, the user defines for one or more damaged areas 4a, 4b, 4c, 5a, 5b, 5c (4a-5c) of a body part 3 its location, shape, and impact level, the latter being indicative of severity and/or depth of the damage. In an embodiment, different types of damages can be specified, e.g. damages with a deformation of a body part or damages to the surface of a body part, e.g. scratches or other paint damages. Various steps performed for defining the damaged areas 4a-5c of a body part 3 will be explained later in more detail with reference to Figure 5.

In step S4, based on one or more damaged areas 4a-5c on one or more body parts 3, the estimator module 12 determines work items or operations, respectively, recommended and/or required for repairing the collision damage to the car, and generates for the user an estimate of the repair cost and/or repair time, as will be explained later in more detail with reference to Figure 6.

In step S5, the operations generator 13 generates for the user repair procedures for carrying out and completing the work items or operations identified in step S4 for repairing the collision damage. The repair procedures include detailed instructions for carrying out the work items or operations as a sequence of repair steps. In a preferred embodiment, the repair procedures are implemented as a set of one or more video sequences which can be selectively viewed, paused, reversed, forwarded, skipped and put in slow motion.

In the following paragraphs, described with reference to Figures 8a, 8b, 9a, 9b, 9c, 10a, 10b, 10c (8a-10c) is an exemplary design of the graphical user interface 100 used for defining the collision damage on a defined body part 3. As illustrated in Figures 8a-10c, the graphical user interface 100 is implemented as a screen window having conventional window control icons 102 for closing the window and for minimizing, restoring, maximizing and adjusting the size of the window, for example. Depending on the embodiment, the window further has function menus which are not illustrated and will not be described herein. The graphical user interface 100 comprises a display and drawing area 109, an operations area 106, an estimates output area 105, an impact level definition area 104, a pointing tool 107, and at least one drawing tool 108, 108'.

The display and drawing area 109 is configured to display a graphical representation or image of a selected body part 3. The display and drawing area 109 is further configured to show on the body part 3 a damaged area 4a-5c as drawn by the user by way of the drawing tool 108, 108' or detected by the outline detector 15 from image data of the selected body part 3 (or of a damaged part thereof).

Preferably, the graphical user interface 100 is configured to toggle between the drawing tool 108 and the pointing tool107. When the pointing tool 107 is activated, the user instructions control the position of the arrow 107' associated with the pointing tool 107. When the drawing tool 107 is activated, the user instructions control the position of the drawing tool 108' icon associated with the drawing tool 108.

The drawing tool 108, 108' enables the user to draw on the body part 3 an outline (or boundary) of a damaged area 4a-5c on a selected body part 3 in the display and drawing area 109. The drawing tool 108, 108' is configured to draw the outline of a damaged area 4a-5c by way of defined geometric shapes, e.g. a circle, an ellipse or an oval, or - in the preferred embodiment - as a manually defined point-by-point or segment-by-segment polygon, or a "freehand" closed curve/line, etc. The outline of a damaged area 4a-5c is positioned on the body part 3 by setting with the drawing tool 108, 108' a starting point for the outline and/or by moving the (finished) outline to a target location on the body part 3. Preferably, for drawing an outline by way of a polygon or closed curve/line, the user uses the drawing tool 108, 108' to position the individual corners or vertices of the polygon, or to navigate or move an icon associated with the drawing tool 108, 108' to effectively draw the curve/line, respectively. In an embodiment, the control module 11 uses graphics processing to adapt the outline of the damaged area 4a-5c to the 3D shape of the body part 3. Preferably, the damaged area 3 is stored as a graphical data object, e.g. including a set of points and/or vectors, defining its outline, shape, form, size and position with regards to the respective body part 3. It should be noted, that the damaged areas 4a-5c may also be defined and drawn as a simple line which represents a scratch on the surface of the selected body part 3.

The pointing tool 107 enables the user to select objects in the display and drawing area 109, e.g. a body part 3 or a damaged area 4a-5c, for further manipulation and processing. For example, a damaged area 4a-5c, defined and drawn by the user or by the outline detector 15, can be altered with regards to its size, shape, location (position) and/or orientation, by way of respective user instructions for re-sizing, point or line editing, moving and/or rotating the damaged area 4a-5c, respectively.

The impact level definition area 104 is configured to receive from the user instructions for setting the impact level of the collision damage in a selected damaged area 4a-5c. In the embodiment shown in Figures 8a-10c, the impact level of a damaged area 4a-5c is defined using impact levels selectors to select one from different defined levels of impact. Specifically, impact level selectors, such as mutually exclusive buttons or checkboxes, labeled L, M, or H, are provided for selecting a low, medium or high impact level, for example. The selected impact level L, M, H is stored assigned to the respective damaged area 4a-5c.

The size of a damaged area 4a-5c can be adjusted, e.g. by using a slide bar labeled S.In an embodiment, using the slide bar S when a body part 3 is selected works as a zooming function and causes the body part 3 to be displayed smaller or larger in the display and drawing area 109.

In an embodiment, setting the impact level for a damaged area 4a-5c causes the size and/or shape of a damaged area 4a-5c to be adjusted.

A damaged area 4a-5c can be deleted, e.g. by using a delete button labeled D.

The operations area 106 is configured to list the work items or operations required and/ recommended for repairing the defined collision damage to the car. In the embodiment illustrated in Figures 8a-10c, the operations area 106 comprises a required operations section with operations that are required or highly recommended for repairing the collision damage, labeled R, and proposed operations section with operations that are proposed at least for consideration when repairing the collision damage, labeled P. In both of these sections of the operations area 106, the required or recommended operations are listed, e.g. each operation as a line item comprising a checkbox for selecting and unselecting the operation, an operations identifier #1, #2, #3, #4, #5, #6, and an operations name or description O1, O2, O3, O4, O5, O6.

The estimates output area 105 is configured to display the estimated time and/or cost for repairing the collision damage to the car. In the embodiment illustrated in Figures 8a-10c, the estimates output area 105 comprises two tabs, one for displaying the estimated repair costs, labeled C, and one for displaying the estimated repair time, labeled T. Both tabs C, T include a display portion arranged on the tab and configured to show the total repair cost or repair time, respectively, regardless of which tab C, T is selected by the user. In the embodiment of Figures 8a-10c, if tab C is selected, the detailed cost estimate is shown, including the estimated cost of repair work CR, the estimated cost of materials and paint CM, and the estimated total repair costs TC. If tab T is selected, the detailed time estimate is shown, including the estimated time for performing the main operations TO, the estimated time for performing additional operations TA, the estimated time for painting TP, and the estimated total repair time TT. Figures 8a, 9a, 9c, 10b illustrate the graphical user interface 100 in the state where tab T is selected and tab C is deactivated; whereas Figures 8b, 9b, 10a, and 10c illustrate the graphical user interface 100 in the state where tab C is selected and tab T is deactivated.

Depending on the type of user interface 10, the pointing tool 107 or its associated arrow 107', respectively; the drawing tool 108 or the icon associated with the drawing tool 108', respectively; the impact level selectors L, M, H; the slide bar S; the delete button D; the tabs C and T; and/or other operating elements of the graphical user interface 100, such as the scroll bar 103 or the "CANCEL" or "OK" buttons; are operated by the user by way of a pointing device controlling a pointer or by touching the operating elements on the screen, directly with the fingers or by way of a stylus, depending on the type of user interface 10, display, and/or data entry elements 101, respectively.

As illustrated in Figure 5, for defining the collision damage on a defined body part 3, in optional step S31, the user selects in the graphical user interface 100 the drawing tool 108, if has not already been selected or activated before. Figures 8a, 9a, 9c, 10b illustrate the graphical user interface 100 in the state where the pointing tool 107 is selected and the drawing tool 108 is deactivated, thus showing in the display and drawing area 109 arrow 107' as the active user controllable pointing device; whereas Figures 8b, 9b, 10a, and 10c10b illustrate the graphical user interface 100 in the state where the drawing tool 108 is selected and the pointing tool 107 is deactivated, thus showing in the display and drawing area 109 the icon associated with the drawing tool 108' as the active user controllable painting device. Figures 8a and 8b illustrate the graphical user interface 100 in a state where a body part 3 is displayed without any damaged areas drawn on it.

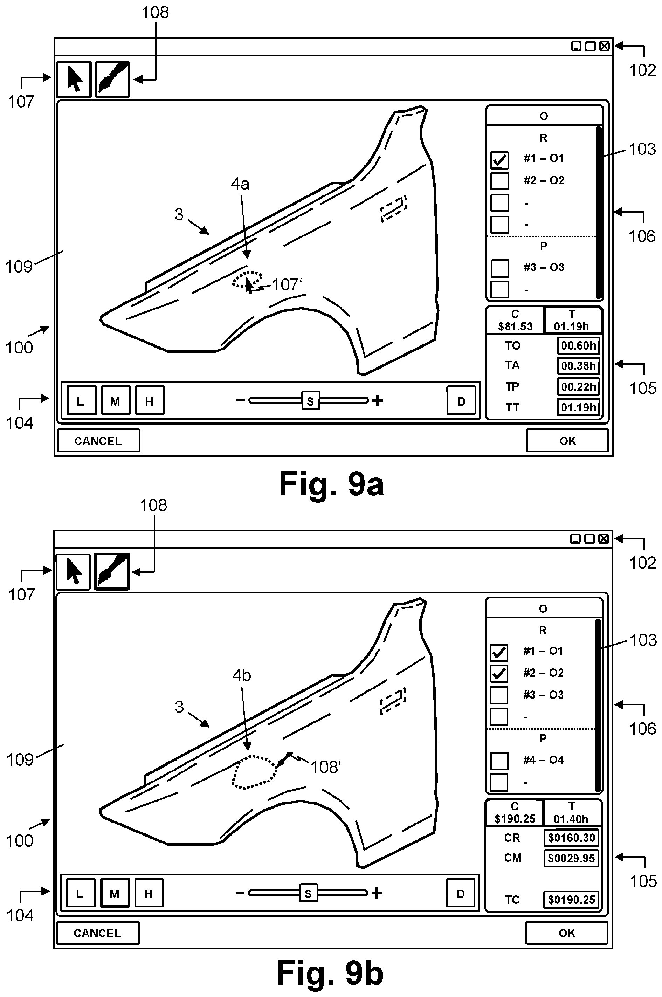

In step S32, the user uses the drawing tool 108 or the icon associated with the drawing tool 108', respectively, to draw a damaged area 4a-5c on the displayed body part 3. Alternatively, a photograph or an image of the selected body part 3 and/or the damaged area 4a-5c is scanned and/or loaded by the user into the computer system 1, and the outline of the damaged area 4a-5c is detected by the outline detector 15 from the image data. As illustrated in Figures 9a-10c, the outlines of the damaged areas 4a-5c are rendered and drawn on the body part 3 as instructed by the user by way of the drawing tool 108, 108' or as generated by the outline detector 15, respectively. As mentioned above, the size of a selected damaged area 4a-5c can be changed and, depending on the type of drawing tool 108 used, the shape of the damaged area 4a-5c can be altered as well.

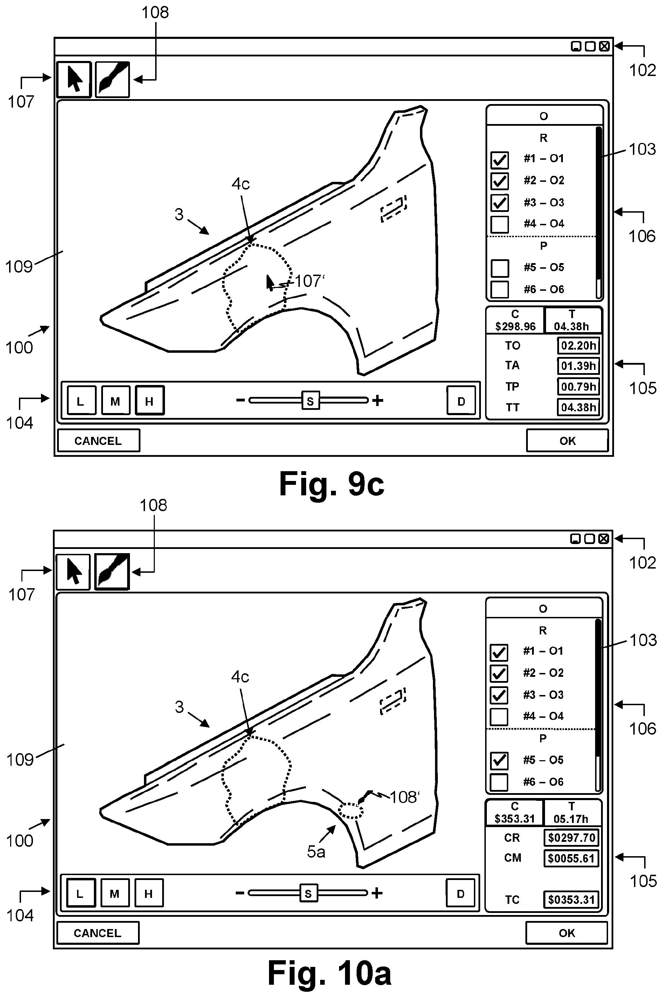

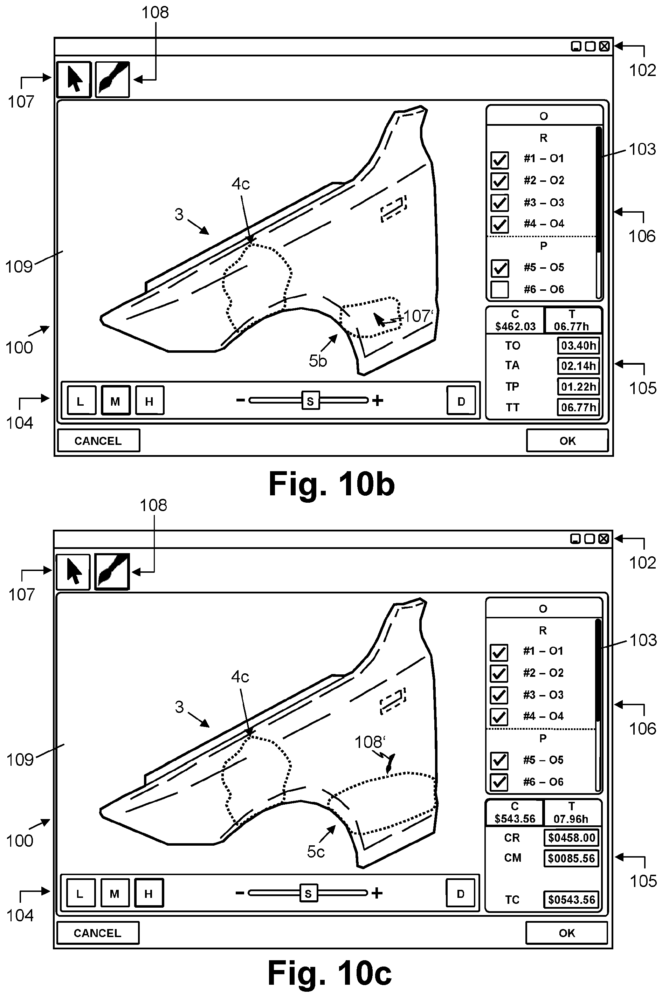

In step S33, the user defines the impact level of a selected damaged area 4a-5c. In Figure 9a, the damaged area 4a is illustrated having a low impact level; in Figure 9b, the damaged area 4b is shown with a medium impact level, and in Figures 9c, 10a, 10b and 10c, the damaged area 4c is shown with a high impact level. In Figure 10a, the damaged area 5a is illustrated having a low impact level; in Figure 10b, the damaged area 5b is shown with a medium impact level, and in Figure 10c the damaged area 410c is shown with a high impact level.

Although this is not visible in the present black and white Figures, the graphical user interface 100 is configured such that the damaged areas 4a-5c are filled and/or outlined with a color that depends on the impact level assigned to the damaged area 4a-5c and corresponds to the color of the respective impact level selector L, M, H.

Once the user has completed defining the collision damage on the selected body part 3, or if the user wishes to get an intermediate estimate for the damage defined so far, step S3 is completed by clicking the "OK" button. Subsequently, the control module 11 activates the estimator module 12 to perform an updated repair estimate including the damaged areas 4a-5c drawn on body part 3.

In step S4, the estimator module 12 determines an estimate of the time and/or costs required to repair the collision damage defined.

In step S41, the estimator module 12 retrieves the characteristics of the selected body part 3 from the database 14.

In step S42, the estimator module 12 determines other car parts that are or may be impacted and damaged by the collision. These other car parts are determined by the estimator module 12 based on the characteristics of the selected body part 3, and the shape, location and impact level of the damaged area 4a-5c. Specifically, the estimator module 12 uses the information about the body part's relative position and distance to other car parts, or vice versa, in combination with the shape, location and impact level of the damaged area 4a-5c, for identifying other car parts that are or may be damaged by the collision. For determining the probability that another car part was damaged by the collision, the estimator module 12 relies on stored data and/or defined algorithms taking into consideration statistical data from a plurality of collision damage reports.

For example, if a car part is located in the vicinity of the damaged area 4a-5c, e.g. if a normal on the body part 3 is located in the damaged area 4a-5c and runs through the respective other car part, the probability of the respective other car part being damaged is calculated as a function of the other car part's relative distance, the material and thickness of the body part, and the impact level in the damaged area 4a-5c. In essence, the material and thickness of the body part 3 and the impact level define a temporary (dynamic) and/or permanent deformation of the body part 3 in the damaged area 4a-5c as a result of the collision. The damage probability depends on the temporary and/or permanent deformation (damage) of the body part 3 and the relative distance of a respective other car part to the body part.

In step S43, the estimator module 12 determines work items or operations for repairing the collision damage. The work items or operations are determined by the estimator module 12 based on the characteristics of the selected body part 3 and damage probabilities of other car parts. For example, the estimator module 12 shows in the required operations section R of the operations area 106 those work items or operations required for replacing and/or repairing the damaged areas 4a-5c and other car parts having a determined damage calculation probability at or above a defined upper damage threshold level. Accordingly, work items or operations required for replacing and/or repairing other car parts, having a determined damage calculation probability below the defined upper damage threshold level but above a lower damage threshold level, are shown by the estimator module 12 in the proposed operations section P of the operations area 106. Subsequently, the estimator module 12 receives from the user selections of the work items or operations in the required and proposed operations sections R, P of the operations area 106 that need to be included in the estimate of repair cost and/or time. For example, as illustrated in Figures 9a-10c, the work items or operations are selected by the user by setting check marks in the respective check boxes.

In step S44, the estimator module 12 determines the estimated time required for repairing and/or replacing the body part 3. The estimated repair time is determined by the estimator module 12 based on the characteristics of the selected body part 3, and the shape, location and impact level of the damaged areas 4a-5c. Specifically, the estimator module 12 uses the information about the body part's material, thickness, and repair accessibility in combination with the shape, location and impact level of the damaged areas 4a-5c, for determining the estimated repair time. For determining the repair time, the estimator module 12 relies on stored data and/or defined algorithms taking into consideration statistical data from a plurality of damage repair reports. The estimated replacement time is determined by the estimator module 12 based on the replacement timing information stored in the database 14. In an embodiment, the decision whether to repair or replace a body part 3 is taken by the estimator module 12 based on cost and/or time efficiency as described below.

In step S45, the estimator module 12 determines the estimated costs for repairing and/or replacing the body part 3. The estimated repair costs are determined by the estimator module 12 based on the estimated repair times and hourly rates stored in the database 14. Furthermore, the estimated repair costs include estimated costs for materials required for the repair. For determining the estimated costs for materials required for the repair, the estimator module 12 relies on stored data and/or defined algorithms taking into consideration statistical data from a plurality of damage repair reports. The estimated replacement costs are determined by the estimator module 12 based on pricing and timing information stored in the database 14 for replacement of the body part 3.

In step S46, the estimator module 12 determines the estimated time required for replacing other car parts. The estimated repair (replacement) time is determined by the estimator module 12 based on the replacement timing information stored in the database 14.

In step S47, the estimator module 12 determines the estimated costs for replacing other car parts. The estimated repair (replacement) costs are determined by the estimator module 12 based on pricing and timing information stored in the database 14 for replacement of the respective car part.

In step S48, the estimator module 12 determines the estimated time required for painting the repaired or replaced body part 3. The estimated time for paint work is determined by the estimator module 12 based on timing and/or size information stored in the database 14 for the body part 3.

In step S49, the estimator module 12 determines the estimated costs for painting the body part 3. The estimated costs for painting the body part 3 are determined by the estimator module 12 based on pricing and timing information stored in the database 14 for painting the body part 3.

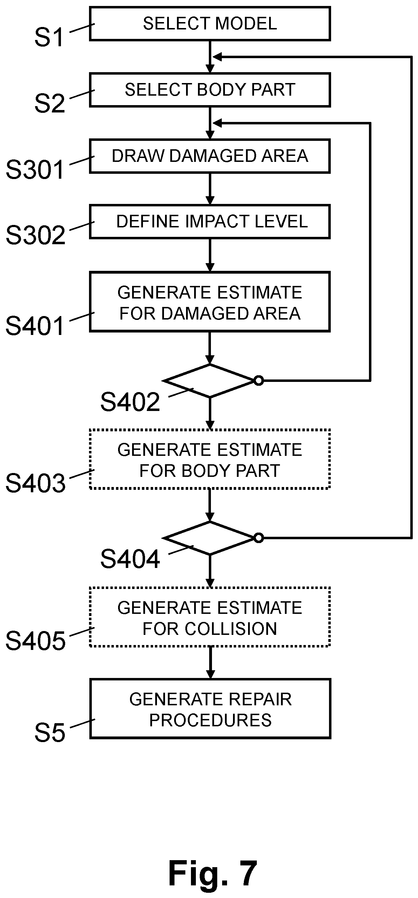

Figure 7 shows a flow diagram illustrating an exemplary sequence of steps for defining one or more damaged areas 4a-5c on one or more body parts 3 of a car, and generating an estimate of collision damage to the car including estimated repair time and repair costs.

In step S1, the model of the car is selected, as described above with reference to Figure 4.

In step S2, a damaged body part 3 is selected and displayed in the graphical user interface 100, as described above with reference to Figure 4.

In step S301, a damaged area is drawn on the selected body part 3, as described above in the context of step S32 with reference to Figure 5. For example, the outline of damaged area 4a is drawn on the body part 3 as illustrated in Figure 9a.

In step S302, the impact level of the damaged area 4a is defined, as described above in the context of step S33 with reference to Figure 5. For example, the impact level for the damaged area 4a is set to low impact L as illustrated in Figure 9a.

In step S401, an estimate is generated for the damaged area 4a defined thus far, as described above in the context of step S4 (including steps S41-S49) with reference to Figure 4. Accordingly, as illustrated in Figure 9a, for example, the required work items or operations #1-01, #2-02 are displayed and checked in the required operations section R of the operations area 106. Furthermore, the estimated total time, required for performing the checked operations and thereby repairing the damaged area 4a, is determined and shown on time tab T. As tab T is selected as the active tab, the estimates output area 105 further shows details of the time estimate, including the estimated times for performing the main operations TO, for performing additional operations TA, and for painting the body part TP. In addition the estimated total costs for repairing the damaged area 4a, is determined and shown on the cost tab C.

In step S402, the control module 11 checks whether the damage on the selected body part 3 has been completely defined or whether further damaged areas are to be drawn on the selected body part 3. For example, to complete the definition of the damage on a body part the user may select another body part or end the definition of the collision damage for the car. If further damaged areas 4b-5c are to be drawn on the selected body part 3, or if a damaged area 4a-5c is to be altered or its impact level changed, processing continues in step S301; otherwise, processing continues in step S403.

Figures 9b-10c show the graphical user interface 100 in correspondence with different repetitions of the sequence of steps S301, S302, and S401.

Specifically, Figure 9b shows the graphical user interface 100 after the impact level of the damaged area 4b has been set to medium M. Accordingly, in the required operations section R of the operations area 106, the required work items or operations are extended by another item #2-02, taking into consideration the increased level of impact and size of the damaged area 4b. Furthermore, the estimated time, required for performing the checked operations and thereby repairing the damaged area 4a, is re-determined and shown on time tab T. In addition the estimated total costs for repairing the damaged area 4a are re-determined and shown on the cost tab C. As tab C is selected as the active tab, the estimates output area 105 further shows details of the costs estimate, including the estimated cost of repair work CR, the estimated cost of materials and paint CM, and the estimated total repair costs TC.

Figure 9c shows the graphical user interface 100 after the impact level of the damaged area 4c has been set to high H. Accordingly, the required work items or operations are extended by another item #3-03. Furthermore, estimates for the repair time and repair costs are re-calculated, considering the altered size and impact level of the damaged area 4c, and the estimates output area 105 is updated accordingly.

Figure 10a shows the graphical user interface 100 after an additional damaged area 5a has been drawn on the selected body part 3, its impact level set to low L. Accordingly, the proposed work items or operations are extended by another item #5-05. Furthermore, estimates for the repair time and repair costs are re-calculated, considering the addition of damaged area 5a, and the estimates output area 105 is updated accordingly.

Figure 10b shows the graphical user interface 100 after the impact level of the damaged area 5b has been set to medium M. Accordingly, the required work items or operations are extended by another item #4-04. Furthermore, estimates for the repair time and repair costs are re-calculated, considering the altered size and impact level of the damaged area 5b, and the estimates output area 105 is updated accordingly.

Figure 10c shows the graphical user interface 100 after the impact level of the damaged area 5c has been set to high H. Accordingly, the proposed work items or operations are extended by another item #6-06. Furthermore, estimates for the repair time and repair costs are re-calculated, considering the altered size and impact level of the damaged area 5c, and the estimates output area 105 is updated accordingly.

In step S403, an estimate is generated for the body part 3, including the damaged areas 4c, 5c drawn on the body part 3 at their current impact levels, as described above in the context of step S4 or step S401, respectively. If in step S402 the estimate is not only generated for the one damaged area 4a-5c that is currently being defined, but is updated for all damaged areas 4c, 5c drawn on the body part 3 at their respective impact levels, step S403 is not necessary and thus optional.

In step S404, the control module 11 checks whether the damage has been defined for all body parts 3 impacted by the collision or whether further body parts 3 need to be selected and have damaged areas 4a-5c drawn on them. If further body parts 3 are to be selected for damage definition, or if a damaged area 4a-5c is to be altered or its impact level changed on another body part 3, processing continues in step S2; otherwise, processing continues in step S405.

In step S405, an estimate is generated for the overall (total) collision damage to the car, including the damaged areas 4c, 5c drawn on all body parts 3 at their currently defined impact levels, as described above in the context of steps S4, S401, or S403, respectively. If in step S401 or S403 the estimate is not only generated for the one damaged area 4a-5c or the one body part 3, respectively, which are currently being defined, but is updated for all damaged areas 4c, 5c drawn on all body parts 3 at their respective impact levels, step S405 is not necessary and thus optional.

In step S5, the operations generator 13 generates for the user detailed repair procedures for carrying out and completing the work items or operations identified (as described above in the context of step S43) in steps S401, S403 or S405, respectively, for repairing the collision damage. The repair procedures are displayed, for example, in the display or drawing area 109 of the graphical user interface 100, and can be printed onto paper or stored on a computer-readable data storage medium.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

### List of Reference Numerals for Figures 1, 2, 3, and 8a-10c

- 1: Computer system
- 1a, 1b, 1c: Communication terminal
- 1d: Server
- 2: Communication network
- 3: Body part of car
- 4a, 4b, 4c: Damaged area
- 5a, 5b, 5c: Damaged area
- 10: User interface
- 11: Control module
- 12: Estimator module
- 13: Operations generator
- 14: Database
- 15: Outline detector
- 100: Graphical user interface
- 101: Data entry elements
- 102: Window control icons
- 103: Scroll bar
- 104: Impact level definition area
- 105: Estimates output area
- 106: Operations area
- 107: Pointing tool
- 108, 108': Drawing tool
- 109: Drawing area
- C: Tab for estimated repair costs
- D: Delete button
- CR: Estimated cost of repair work
- CM: Estimated cost of materials and paint
- H: High impact level
- L: Low impact level
- M: Medium impact level
- T: Tab for estimated repair time
- TA: Estimated time for performing additional operations
- TC: Estimated total repair costs
- TO: Estimated time for performing the main operations
- TP: Estimated time for painting
- TT: Estimated total repair time
- O: Operations area
- P: Proposed operations section
- R: Recommended operations section
- S: Slide bar

## Claims

1. A computer system (1) for determining an estimate of collision damage to a car, the system (1) comprising a user interface (100) configured to display a body part (3) of the car,
wherein the user interface (100) is further configured to receive from a user input for defining on the body part (3) an outline of at least one damaged area (4a, 4b, 4c, 5a, 5b, 5c), and to draw the at least one damaged area (4a, 4b, 4c, 5a, 5b, 5c) on the body part (3) according to the defined outline, and
the system (1) further comprises an estimator module (12) configured to:
generate for the user an estimate of repair time, based on the at least one damaged area (4a, 4b, 4c, 5a, 5b, 5c) drawn on the body part (3), using characteristics of the body part (3) determined from a database (14), including repair accessibility of the body part (3),
determine at least one probability that at least one other car part was damaged by the collision, relying on stored data, wherein, if a respective other car part is located in a vicinity of the at least one damaged area (4a, 4b, 4c, 5a, 5b, 5c), the probability of the respective other car part being damaged is calculated as a function of the other car part's relative distance, a material and thickness of the body part, and an impact level in the at least one damaged area (4a, 4b, 4c, 5a, 5b, 5c),
determine work items or operations for repairing the collision damage based on the characteristics of the body part (3) and the at least one probability of the at least one other car part, the estimator module (12) showing in a required operations section (R) of an operations area (106) of the user interface (100) those work items or operations required for replacing and/or repairing the at least one damaged area (4a, 4b, 4c, 5a, 5b, 5c) and the at least one other car part for which the probability was determined to be at or above a defined upper damage threshold level, and showing in a proposed operations section (P) of the operations area (106) those work items or operations required for replacing and/or repairing the at least one other car part for which the probability is below the defined upper damage threshold level but above a lower damage threshold level, and
receive from the user selections of the work items or operations in the required operations section (R) and in the proposed operations section (P) that are included in the estimate of repair time.

2. The system (1) of claim 1, wherein the user interface (100) comprises a drawing tool (108, 108') enabling the user to draw the outline of the at least one damaged area (4a, 4b, 4c, 5a, 5b, 5c) on the body part (3).

3. The system (1) of one of claims 1 or 2, wherein the user interface (100) is further configured to receive from the user an image of the body part (3), and the system further comprises an outline detector (15) configured to detect the outline of the at least one damaged area (4a, 4b, 4c, 5a, 5b, 5c) from the image of the body part (3).

4. The system (1) of one of claims 1 to 3, wherein the user interface (100) is configured to receive positioning instructions from the user, and to position the at least one damaged area (4a, 4b, 4c, 5a, 5b, 5c) on the body part (3) in response to the positioning instructions.

5. The system (1) of one of claims 1 to 4, wherein the user interface (100) is further configured to receive from the user an indication of the impact level (L, M, H) for the at least one damaged area (4a, 4b, 4c, 5a, 5b, 5c) drawn on the body part (3); and the estimator module (12) is further configured to generate the estimate depending on the impact level (L, M, H) for the at least one damaged area (4a, 4b, 4c, 5a, 5b, 5c).

6. The system (1) of one of claims 1 to 5, wherein the estimator module (12) is further configured to determine further parts of the car which are impacted by a damage of the body part (3) as defined by the at least one damaged area (4a, 4b, 4c, 5a, 5b, 5c) drawn on the body part (3), and to include a repair of these further parts in generating the estimate.

7. The system (1) of one of claims 1 to 6, further comprising an operations generator (13) configured to generate for the user procedures for repairing the collision damage, based on the characteristics of the body part (3), a damage of the body part (3) as defined by the at least one damaged area (4a, 4b, 4c, 5a, 5b, 5c) drawn on the body part (3), and further parts of the car which are impacted by the damage of the body part (3) as defined by the at least one damaged area (4a, 4b, 4c, 5a, 5b, 5c) drawn on the body part (3).

8. The system (1) of one of claims 1 to 7, wherein the user interface (100) is further configured to receive from the user selections of a car model and at least one body part (3) of the car model; and the estimator module (12) is further configured to generate the estimate depending on the body part (3) of the car model.

9. A computer-implemented method of determining an estimate of collision damage to a car, the method comprising displaying in a user interface (100) a body part (3) of the car, wherein the method further comprises:
receiving from a user through the user interface (100) input for defining on the body part (3) an outline of at least one damaged area (4a, 4b, 4c, 5a, 5b, 5c);
drawing the at least one damaged area (4a, 4b, 4c, 5a, 5b, 5c) on the body part (3) according to the defined outline,
generating, by an estimator module (12), for the user an estimate of repair time, based on the at least one damaged area (4a, 4b, 4c, 5a, 5b, 5c) drawn on the body part (3), using characteristics of the body part (3) determined from a database (14), including repair accessibility of the body part (3),
determining, by the estimator module (12), at least one probability that at least one other car part was damaged by the collision, relying on stored data, wherein, if a respective other car part is located in a vicinity of the at least one damaged area (4a, 4b, 4c, 5a, 5b, 5c), the probability of the respective other car part being damaged is calculated as a function of the other car part's relative distance, a material and thickness of the body part, and an impact level in the at least one damaged area (4a, 4b, 4c, 5a, 5b, 5c),
determining, by the estimator module (12), work items or operations for repairing the collision damage based on the characteristics of the body part (3) and the at least one probability of the at least one other car part, the estimator module (12) showing in a required operations section (R) of an operations area (106) of the user interface (100) those work items or operations required for replacing and/or repairing the at least one damaged area (4a, 4b, 4c, 5a, 5b, 5c) and the at least one other car part for which the probability was determined to be at or above a defined upper damage threshold level, and showing in a proposed operations section (P) of the operations area (106) those work items or operations required for replacing and/or repairing the at least one other car part for which the probability is below the defined upper damage threshold level but above a lower damage threshold level, and
receiving, by the estimator module (12), from the user selections of the work items or operations in the required operations section (R) and in the proposed operations section (P) that are included in the estimate of repair time.

10. The method of claim 9, wherein the method further comprises providing in the user interface (100) a drawing tool (108, 108') which enables the user to draw the outline of the at least one damaged area (4a, 4b, 4c, 5a, 5b, 5c) on the body part (3).

11. The method of one of claims 9 or 10, wherein the method further comprises receiving from the user an image of the body part (3), and detecting the outline of the at least one damaged area (4a, 4b, 4c, 5a, 5b, 5c) from the image of the body part (3).

12. The method of one of claims 9 to 11, wherein the method further comprises receiving through the user interface (100) positioning instructions from the user; and positioning the at least one damaged area (4a, 4b, 4c, 5a, 5b, 5c) on the body part (3) in response to the positioning instructions.

13. The method of one of claims 9 to 12, wherein the method further comprises receiving from the user through the user interface (100) an indication of the impact level (L, M, H) for the at least one damaged area (4a, 4b, 4c, 5a, 5b, 5c) drawn on the body part (3); and generating the estimate depending on the impact level (L, M, H) for the at least one damaged area (4a, 4b, 4c, 5a, 5b, 5c).

14. The method of one of claims 9 to 13, wherein the method further comprises determining further parts of the car which are impacted by a damage of the body part (3) as defined by the at least one damaged area (4a, 4b, 4c, 5a, 5b, 5c) on the body part (3); and including a repair of these further parts in generating the estimate.

15. The method of one of claims 9 to 14, wherein the method further comprises generating for the user procedures for repairing the collision damage, based on the characteristics of the body part (3), a damage of the body part (3) as defined by the at least one damaged area (4a, 4b, 4c, 5a, 5b, 5c) drawn on the body part (3), and further parts of the car which are impacted by the damage of the body part (3) as defined by the at least one damaged area (4a, 4b, 4c, 5a, 5b, 5c) drawn on the body part (3).

16. The method of one of claims 9 to 15, wherein the method further comprises receiving from the user through the user interface (100) selections of a car model and at least one body part (3) of the car model; and generating the estimate depending on the body part (3) of the car model.

17. A computer program product comprising a computer readable medium having stored thereon computer program code which directs a computer system (1) for estimating collision damage to a car to:
display in a user interface (100) a body part (3) of the car;
receive from a user through the user interface (100) input for defining on the body part (3) an outline of at least one damaged area (4a, 4b, 4c, 5a, 5b, 5c);
draw the at least one damaged area (4a, 4b, 4c, 5a, 5b, 5c) on the body part (3) according to the defined outline,
generate, by an estimator module (12), for the user an estimate of repair time, based on the at least one damaged area (4a, 4b, 4c, 5a, 5b, 5c) drawn on the body part (3), using characteristics of the body part (3) determined from a database (14), including repair accessibility of the body part (3),
determine, by the estimator module (12), at least one probability that at least one other car part was damaged by the collision, relying on stored data, wherein, if a respective other car part is located in a vicinity of the at least one damaged area (4a, 4b, 4c, 5a, 5b, 5c), the probability of the respective other car part being damaged is calculated as a function of the other car part's relative distance, a material and thickness of the body part, and an impact level in the at least one damaged area (4a, 4b, 4c, 5a, 5b, 5c),
determine, by the estimator module (12), work items or operations for repairing the collision damage based on the characteristics of the body part (3) and the at least one probability of the at least one other car part, the estimator module (12) showing in a required operations section (R) of an operations area (106) of the user interface (100) those work items or operations required for replacing and/or repairing the at least one damaged area (4a, 4b, 4c, 5a, 5b, 5c) and the at least one other car part for which the probability was determined to be at or above a defined upper damage threshold level, and showing in a proposed operations section (P) of the operations area (106) those work items or operations required for replacing and/or repairing the at least one other car part for which the probability is below the defined upper damage threshold level but above a lower damage threshold level, and
receive, by the estimator module (12), from the user selections of the work items or operations in the required operations section (R) and in the proposed operations section (P) that are included in the estimate of repair time.

18. The computer program product of claim 17, wherein the computer program code additionally directs the computer system (1) to perform a method according to one of claims 9 to 16.

## Patentansprüche

1. Computersystem (1) zum Bestimmen einer Schätzung eines Kollisionsschadens an einem Fahrzeug, wobei das System (1) eine Benutzerschnittstelle (100) umfasst, die dazu ausgelegt ist, ein Karosserieteil (3) des Fahrzeugs anzuzeigen,
wobei die Benutzerschnittstelle (100) ferner dazu ausgelegt ist, von einem Benutzer eine Eingabe zum Definieren eines Umrisses von mindestens einem beschädigten Bereich (4a, 4b, 4c, 5a, 5b, 5c) auf dem Karosserieteil (3) zu erhalten und den mindestens einen beschädigten Bereich (4a, 4b, 4c, 5a, 5b, 5c) auf dem Karosserieteil (3) gemäß dem definierten Umriss einzuzeichnen, und
das System (1) ferner umfassend ein Schätzermodul (12), das dazu ausgelegt ist:
eine Schätzung der Reparaturzeit für den Benutzer zu erzeugen, basierend auf dem mindestens einen beschädigten Bereich (4a, 4b, 4c, 5a, 5b, 5c), der auf dem Karosserieteil (3) eingezeichnet ist, unter Verwendung von Merkmalen des Karosserieteils (3), die aus einer Datenbank (14) bestimmt werden, einschließlich der Reparaturzugänglichkeit des Karosserieteils (3),
unter Rückgriff auf gespeicherte Daten mindestens eine Wahrscheinlichkeit zu bestimmen, dass mindestens ein anderes Fahrzeugteil durch die Kollision beschädigt wurde, wobei, wenn sich ein jeweiliges anderes Fahrzeugteil in der Nähe des mindestens einen beschädigten Bereichs (4a, 4b, 4c, 5a, 5b, 5c) befindet, die Wahrscheinlichkeit, dass das jeweilige andere Karosserieteil beschädigt wird, als Funktion des relativen Abstands des anderen Karosserieteils, eines Materials und einer Dicke des Karosserieteils und eines Aufprallgrads in dem mindestens einen beschädigten Bereich (4a, 4b, 4c, 5a, 5b, 5c) berechnet wird,
Arbeitsposten oder Arbeitsvorgänge zum Reparieren des Kollisionsschadens auf der Basis der Eigenschaften des Karosserieteils (3) und der mindestens einen Wahrscheinlichkeit des mindestens einen anderen Fahrzeugteils zu bestimmen, wobei das Schätzermodul (12) in einem Abschnitt erforderlicher Arbeitsvorgänge (R) eines Arbeitsbereichs (106) der Benutzerschnittstelle (100) die Arbeitsposten oder Arbeitsvorgänge anzeigt, die zum Ersetzen und/oder Reparieren des mindestens einen beschädigten Bereichs (4a, 4b, 4c, 5a, 5b, 5c) und des mindestens einen anderen Fahrzeugteils, für die die Wahrscheinlichkeit bestimmt wurde, an oder über einem definierten oberen Schadensschwellenwert zu liegen, erforderlich sind und in einem Abschnitt vorgeschlagener Arbeitsvorgänge (P) des Arbeitsbereichs (106) diejenigen Arbeitsposten oder Arbeitsvorgänge anzeigt, die für den Austausch und/oder die Reparatur des mindestens einen anderen Fahrzeugteils, für die die Wahrscheinlichkeit unter dem definierten oberen Schadensschwellenwert, aber über einem unteren Schadensschwellenwert liegt, erforderlich sind und
vom Benutzer die Auswahl der Arbeitsposten oder Arbeitsvorgänge im Abschnitt erforderlicher Arbeitsvorgänge (R) und im Abschnitt vorgeschlagener Arbeitsvorgänge (P) zu erhalten, die in die Schätzung der Reparaturzeit einbezogen werden.

2. Das System (1) nach Anspruch 1, wobei die Benutzerschnittstelle (100) ein Zeichenwerkzeug (108, 108') umfasst, das es dem Benutzer ermöglicht, den Umriss des mindestens einen beschädigten Bereichs (4a, 4b, 4c, 5a, 5b, 5c) auf dem Karosserieteil (3) einzuzeichnen.

3. Das System (1) nach einem der Ansprüche 1 oder 2, wobei die Benutzerschnittstelle (100) ferner so ausgelegt ist, dass sie von dem Benutzer ein Bild des Karosserieteils (3) erhält, und das System ferner einen Umrissdetektor (15) umfasst, der so ausgelegt ist, dass er den Umriss des mindestens einen beschädigten Bereichs (4a, 4b, 4c, 5a, 5b, 5c) aus dem Bild des Karosserieteils (3) erkennt.

4. Das System (1) nach einem der Ansprüche 1 bis 3, wobei die Benutzerschnittstelle (100) dazu ausgelegt ist, Positionierungsanweisungen vom Benutzer zu erhalten und den mindestens einen beschädigten Bereich (4a, 4b, 4c, 5a, 5b, 5c) auf dem Karosserieteil (3) als Antwort auf die Positionierungsanweisungen zu positionieren.

5. System (1) nach einem der Ansprüche 1 bis 4, wobei die Benutzerschnittstelle (100) ferner so ausgelegt ist, dass sie von dem Benutzer eine Angabe des Aufprallgrads (L, M, H) für den mindestens einen beschädigten Bereich (4a, 4b, 4c, 5a, 5b, 5c), der auf dem Karosserieteil (3) eingezeichnet ist, erhält; und das Schätzermodul (12) ferner so ausgelegt ist, dass es die Schätzung in Abhängigkeit von dem Aufprallgrad (L, M, H) für den mindestens einen beschädigten Bereich (4a, 4b, 4c, 5a, 5b, 5c) erzeugt.

6. System (1) nach einem der Ansprüche 1 bis 5, wobei das Schätzermodul (12) ferner dazu ausgelegt ist, weitere Teile des Fahrzeugs zu bestimmen, die von einer Beschädigung des Karosserieteils (3), wie sie durch den mindestens einen auf dem Karosserieteil (3) eingezeichneten beschädigten Bereich (4a, 4b, 4c, 5a, 5b, 5c) definiert ist, betroffen sind, und eine Reparatur dieser weiteren Teile beim Erzeugen der Schätzung miteinzubeziehen.

7. Das System (1) nach einem der Ansprüche 1 bis 6 ferner umfassend einen Arbeitsvorganggenerator (13), der dazu ausgelegt ist, für den Benutzer Abläufe zur Reparatur des Kollisionsschadens zu erzeugen auf der Grundlage der Merkmale des Karosserieteils (3), eines Schadens des Karosserieteils (3), wie er durch den mindestens einen beschädigten Bereich (4a, 4b, 4c, 5a, 5b, 5c) definiert ist, der auf dem Karosserieteil (3) eingezeichnet ist, und weiterer Teile des Fahrzeugs, die von der Beschädigung des Karosserieteils (3) betroffen sind, die durch den mindestens einen beschädigten Bereich (4a, 4b, 4c, 5a, 5b, 5c) definiert sind, der auf dem Karosserieteil (3) eingezeichnet ist.

8. System (1) nach einem der Ansprüche 1 bis 7, wobei die Benutzerschnittstelle (100) dazu ausgelegt ist, von dem Benutzer Auswahlen eines Fahrzeugmodells und mindestens eines Karosserieteils (3) des Fahrzeugmodells zu erhalten; und das Schätzermodul (12) dazu ausgelegt ist, die Schätzung in Abhängigkeit von dem Karosserieteil (3) des Fahrzeugmodells zu erzeugen.

9. Computerimplementiertes Verfahren zum Bestimmen einer Schätzung eines Kollisionsschadens an einem Fahrzeug, das Verfahren umfassend das Anzeigen eines Karosserieteils (3) des Fahrzeugs in einer Benutzerschnittstelle (100), wobei das Verfahren ferner umfasst:
erhalten einer Eingabe von einem Benutzer über die Benutzerschnittstelle (100), um auf dem Karosserieteil (3) einen Umriss von mindestens einem beschädigten Bereich (4a, 4b, 4c, 5a, 5b, 5c) zu definieren;
einzeichnen des mindestens einen beschädigten Bereichs (4a, 4b, 4c, 5a, 5b, 5c) auf dem Karosserieteil (3) entsprechend dem definierten Umriss,
erzeugen einer Schätzung der Reparaturzeit für den Benutzer durch ein Schätzermodul (12) auf der Basis des mindestens einen beschädigten Bereichs (4a, 4b, 4c, 5a, 5b, 5c), der auf dem Karosserieteil (3) eingezeichnet wurde, unter Verwendung von Merkmalen des Karosserieteils (3), die aus einer Datenbank (14) bestimmt wurden und die die Reparaturzugänglichkeit des Karosserieteils (3) miteinbeziehen,
bestimmen, durch das Schätzermodul (12), mindestens einer Wahrscheinlichkeit, dass mindestens ein anderes Fahrzeugteil durch die Kollision beschädigt wurde, unter Rückgriff auf gespeicherte Daten, wobei, wenn sich ein entsprechendes anderes Fahrzeugteil in der Nähe des mindestens einen beschädigten Bereichs (4a, 4b, 4c, 5a, 5b, 5c) befindet, die Wahrscheinlichkeit, dass das jeweilige andere Karosserieteil beschädigt wird, als eine Funktion des relativen Abstands des anderen Karosserieteils, eines Materials und einer Dicke des Karosserieteils und eines Aufprallgrads in dem mindestens einen beschädigten Bereich (4a, 4b, 4c, 5a, 5b, 5c) berechnet wird,
bestimmen, durch das Schätzermodul (12), von Arbeitsposten oder Arbeitsvorgängen zum Reparieren des Kollisionsschadens auf der Basis der Eigenschaften des Karosserieteils (3) und der mindestens einen Wahrscheinlichkeit des mindestens einen anderen Fahrzeugteils, wobei das Schätzermodul (12) in einem Abschnitt erforderlicher Arbeitsvorgänge (R) eines Arbeitsbereichs (106) der Benutzerschnittstelle (100) diejenigen Arbeitsposten oder Arbeitsvorgänge anzeigt, die zum Ersetzen und/oder Reparieren des mindestens einen beschädigten Bereichs (4a, 4b, 4c, 5a, 5b, 5c) und des mindestens einen anderen Fahrzeugteils, für die die Wahrscheinlichkeit bestimmt wurde, an oder über einem definierten oberen Schadensschwellenwert zu liegen, erforderlich sind und in einem Abschnitt vorgeschlagener Arbeitsvorgänge (P) des Arbeitsbereichs (106) diejenigen Arbeitsposten oder Arbeitsvorgänge anzeigt, die für den Ersatz und/oder die Reparatur des mindestens einen anderen Fahrzeugteils, für die die Wahrscheinlichkeit unter dem definierten oberen Schadensschwellenwert, aber über einem unteren Schadensschwellenwert liegt, erforderlich sind und
erhalten, durch das Schätzermodul (12), von dem Benutzer Auswahlen der Arbeitsposten oder Arbeitsvorgänge im Abschnitt erforderlicher Arbeitsvorgänge (R) und im Abschnitt vorgeschlagener Arbeitsvorgänge (P), die in der Schätzung der Reparaturzeit miteinbezogen sind.

10. Verfahren nach Anspruch 9, wobei das Verfahren ferner das Bereitstellen eines Zeichenwerkzeugs (108, 108') in der Benutzerschnittstelle (100) umfasst, mit dem der Benutzer den Umriss des mindestens einen beschädigten Bereichs (4a, 4b, 4c, 5a, 5b, 5c) auf dem Karosserieteil (3) einzeichnen kann.

11. Verfahren nach einem der Ansprüche 9 oder 10, wobei das Verfahren ferner das Erhalten eines Bildes des Karosserieteils (3) von dem Benutzer und das Erkennen des Umrisses des mindestens einen beschädigten Bereichs (4a, 4b, 4c, 5a, 5b, 5c) aus dem Bild des Karosserieteils (3) umfasst.

12. Verfahren nach einem der Ansprüche 9 bis 11, wobei das Verfahren ferner das Erhalten von Positionierungsanweisungen von dem Benutzer über die Benutzerschnittstelle (100) umfasst; und das Positionieren des mindestens einen beschädigten Bereichs (4a, 4b, 4c, 5a, 5b, 5c) auf dem Karosserieteil (3) als Antwort auf die Positionierungsanweisungen.

13. Verfahren nach einem der Ansprüche 9 bis 12, wobei das Verfahren ferner das Erhalten von dem Benutzer über die Benutzerschnittstelle (100) einer Angabe des Aufprallgrads (L, M, H) für den mindestens einen beschädigten Bereich (4a, 4b, 4c, 5a, 5b, 5c), der auf dem Karosserieteil (3) eingezeichnet ist, umfasst; und das Erzeugen der Schätzung in Abhängigkeit von dem Aufprallgrad (L, M, H) für den mindestens einen beschädigten Bereich (4a, 4b, 4c, 5a, 5b, 5c).

14. Verfahren nach einem der Ansprüche 9 bis 13, wobei das Verfahren ferner das Bestimmen weiterer Teile des Fahrzeugs umfasst, die von einer Beschädigung des Karosserieteils (3) betroffen sind, wie sie durch den mindestens einen beschädigten Bereich (4a, 4b, 4c, 5a, 5b, 5c) auf dem Karosserieteil (3) definiert ist; und das Miteinbeziehen einer Reparatur dieser weiteren Teile in die Erstellung der Schätzung.

15. Verfahren nach einem der Ansprüche 9 bis 14, wobei das Verfahren ferner das Erzeugen von Abläufen zur Reparatur des Kollisionsschadens für den Benutzer umfasst, basierend auf den Eigenschaften des Karosserieteils (3), einem Schaden des Karosserieteils (3), wie er durch den mindestens einen beschädigten Bereich (4a, 4b, 4c, 5a, 5b, 5c) definiert ist, der auf dem Karosserieteil (3) eingezeichnet ist, und weiteren Teilen des Fahrzeugs, die von dem Schaden des Karosserieteils (3) betroffen sind, der durch den mindestens einen beschädigten Bereich (4a, 4b, 4c, 5a, 5b, 5c) definiert ist, der auf dem Karosserieteil (3) eingezeichnet ist.

16. Verfahren nach einem der Ansprüche 9 bis 15, wobei das Verfahren ferner das Erhalten durch den Benutzer über die Benutzerschnittstelle (100) von Auswahlen eines Fahrzeugmodells und mindestens eines Karosserieteils (3) des Fahrzeugmodells umfasst; und das Erzeugen der Schätzung in Abhängigkeit von dem Karosserieteil (3) des Fahrzeugmodells.

17. Computerprogrammprodukt, umfassend ein computerlesbares Medium, auf dem ein Computerprogrammcode gespeichert ist, der ein Computersystem (1) zur Schätzung von Kollisionsschäden an einem Auto anweist, um:
in einer Benutzerschnittstelle (100) ein Karosserieteil (3) des Fahrzeugs anzuzeigen;
von einem Benutzer über die Benutzerschnittstelle (100) Eingaben zu erhalten, um auf dem Karosserieteil (3) einen Umriss von mindestens einem beschädigten Bereich (4a, 4b, 4c, 5a, 5b, 5c) zu definieren;
den mindestens einen beschädigten Bereich (4a, 4b, 4c, 5a, 5b, 5c) auf dem Karosserieteil (3) entsprechend dem definierten Umriss einzuzeichnen,
durch ein Schätzermodul (12) für den Benutzer eine Schätzung der Reparaturzeit auf der Basis des mindestens einen beschädigten Bereichs (4a, 4b, 4c, 5a, 5b, 5c), der auf dem Karosserieteil (3) eingezeichnet wurde, unter Verwendung von Merkmalen des Karosserieteils (3), die aus einer Datenbank (14) bestimmt wurden, einschließlich der Reparaturzugänglichkeit des Karosserieteils (3), zu erzeugen,
durch das Schätzermodul (12) mindestens eine Wahrscheinlichkeit zu bestimmen, dass mindestens ein anderes Fahrzeugteil durch die Kollision beschädigt wurde, auf gespeicherte Daten stützend, wobei, wenn sich ein entsprechendes anderes Fahrzeugteil in einer Nähe des mindestens einen beschädigten Bereichs (4a, 4b, 4c, 5a, 5b, 5c) befindet, die Wahrscheinlichkeit, dass das jeweilige andere Karosserieteil beschädigt wurde, als eine Funktion des relativen Abstands des anderen Karosserieteils, eines Materials und einer Dicke des Karosserieteils und eines Aufprallgrads in dem mindestens einen beschädigten Bereich (4a, 4b, 4c, 5a, 5b, 5c) berechnet wird,
durch das Schätzermodul (12) Arbeitsposten oder Arbeitsvorgänge zur Reparatur des Kollisionsschadens auf der Basis der Eigenschaften des Karosserieteils (3) und der mindestens einen Wahrscheinlichkeit des mindestens einen anderen Fahrzeugteils zu bestimmen, wobei das Schätzermodul (12) in einem Abschnitt erforderlicher Arbeitsvorgänge (R) eines Arbeitsbereichs (106) der Benutzerschnittstelle (100) diejenigen Arbeitsposten oder Arbeitsvorgänge anzeigt, die zum Ersetzen und/oder Reparieren des mindestens einen beschädigten Bereichs (4a, 4b, 4c, 5a, 5b, 5c) und des mindestens einen anderen Fahrzeugteils, für die die Wahrscheinlichkeit auf oder über einem definierten oberen Schadensschwellenwert bestimmt wurde, erforderlich sind und in einem Abschnitt vorgeschlagener Arbeitsvorgänge (P) des Arbeitsbereichs (106) diejenigen Arbeitsposten oder Arbeitsschritte anzeigt, die für den Austausch und/oder die Reparatur des mindestens einen anderen Fahrzeugteils, für die die Wahrscheinlichkeit unter dem definierten oberen Schadensschwellenwert, aber über einem unteren Schadensschwellenwert liegt, erforderlich sind und
durch das Schätzermodul (12) vom Benutzer die Auswahl der Arbeitsposten oder Arbeitsvorgänge im Abschnitt erforderlicher Arbeitsvorgänge (R) und im Abschnitt vorgeschlagener Arbeitsvorgänge (P) zu erhalten, die in die Schätzung der Reparaturzeit miteinbezogen werden.

18. Computerprogrammprodukt nach Anspruch 17, wobei der Computerprogrammcode das Computersystem (1) zusätzlich anweist, ein Verfahren nach einem der Ansprüche 9 bis 16 durchzuführen.

## Revendications

1. Système informatique (1) pour déterminer une estimation des dommages causés par une collision à une voiture, le système (1) comprenant une interface utilisateur (100) configurée pour afficher une partie de la carrosserie (3) de la voiture,
l'interface utilisateur (100) est en outre configurée pour recevoir d'un utilisateur une entrée pour définir sur la partie de carrosserie (3) un contour d'au moins une zone endommagée (4a, 4b, 4c, 5a, 5b, 5c), et pour dessiner la au moins une zone endommagée (4a, 4b, 4c, 5a, 5b, 5c) sur la partie de carrosserie (3) selon le contour défini, et
le système (1) comprend en outre un module estimateur (12) configuré pour :
générer pour l'utilisateur une estimation du temps de réparation, sur la base de la au moins une zone endommagée (4a, 4b, 4c, 5a, 5b, 5c) dessinée sur la partie de la carrosserie (3), à l'aide de caractéristiques de la partie de la carrosserie (3) déterminées à partir d'une base de données (14), notamment l'accessibilité à la réparation de la partie de la carrosserie (3),
déterminer au moins une probabilité qu'au moins une autre partie de voiture ait été endommagée par la collision, en s'appuyant sur des données stockées, dans laquelle, si une autre partie de voiture respective est située à proximité de la zone endommagée au moins (4a, 4b, 4c, 5a, 5b, 5c), la probabilité que la autre partie de la voiture soit endommagée est calculée en fonction de la distance relative de la autre partie de la voiture, du matériau et de l'épaisseur de la partie de la carrosserie et du niveau d'impact dans la zone endommagée (4a, 4b, 4c, 5a, 5b, 5c),
déterminer les éléments de travail ou les opérations pour réparer les dommages causés par la collision sur la base des caractéristiques de la partie de la carrosserie (3) et d'au moins une probabilité de la au moins une autre partie de la voiture, le module estimateur (12) affichant dans une section d'opérations requises (R) d'une zone d'opérations (106) de l'interface utilisateur (100) les éléments de travail ou les opérations nécessaires pour remplacer et/ou réparer la au moins une zone endommagée (4a, 4b, 4c, 5a, 5b, 5c) et au moins une autre pièce de la voiture pour laquelle la probabilité a été déterminée comme étant égale ou supérieure à un seuil de dommage supérieur défini, et affichant dans une section d'opérations proposées (P) de la zone d'opérations (106) les éléments de travail ou les opérations requises pour remplacer et/ou réparer au moins une autre pièce de la voiture pour laquelle la probabilité est inférieure au seuil de dommage supérieur défini, mais supérieure à un seuil de dommage inférieur, et
recevoir de l'utilisateur des sélections des éléments de travail ou des opérations dans la section d'opérations requises (R) et dans la section d'opérations proposées (P) qui sont incluses dans l'estimation du temps de réparation.

2. Le système (1) de la revendication 1, dans lequel l'interface utilisateur (100) comprend un outil de dessin (108, 108') permettant à l'utilisateur de dessiner le contour de la au moins une zone endommagée (4a, 4b, 4c, 5a, 5b, 5c) sur la partie de la carrosserie (3).

3. Le système (1) de l'une des revendications 1 ou 2, dans lequel l'interface utilisateur (100) est en outre configurée pour recevoir de l'utilisateur une image de la partie de la carrosserie (3), et le système comprend en outre un détecteur de contour (15) configuré pour détecter le contour de la au moins une zone endommagée (4a, 4b, 4c, 5a, 5b, 5c) à partir de l'image de la partie de la carrosserie (3).

4. Le système (1) de l'une des revendications 1 à 3, dans lequel l'interface utilisateur (100) est configurée pour recevoir des instructions de positionnement de l'utilisateur, et pour positionner la au moins une zone endommagée (4a, 4b, 4c, 5a, 5b, 5c) sur la partie de la carrosserie (3) en réponse aux instructions de positionnement.

5. Le système (1) de l'une des revendications 1 à 4, dans lequel l'interface utilisateur (100) est en outre configurée pour recevoir de l'utilisateur une indication du niveau d'impact (L, M, H) pour la au moins une zone endommagée (4a, 4b, 4c, 5a, 5b, 5c) dessinée sur la partie de la carrosserie (3) ; et le module estimateur (12) est en outre configuré pour générer l'estimation en fonction du niveau d'impact (L, M, H) pour la au moins une zone endommagée (4a, 4b, 4c, 5a, 5b, 5c).

6. Le système (1) de l'une des revendications 1 à 5, dans lequel le module estimateur (12) est en outre configuré pour déterminer d'autres parties de la voiture qui sont impactées par un dommage de la partie de la carrosserie (3) tel que défini par la au moins une zone endommagée (4a, 4b, 4c, 5a, 5b, 5c) dessinée sur la partie de la carrosserie (3), et pour inclure une réparation de ces autres parties dans la génération de l'estimation.

7. Le système (1) de l'une des revendications 1 à 6, comprenant en outre un générateur d'opérations (13) configuré pour générer pour l'utilisateur des procédures de réparation du dommage de collision , sur la base des caractéristiques de la partie de carrosserie (3), un dommage de la partie de carrosserie (3) tel que défini par la au moins une zone endommagée (4a, 4b, 4c, 5a, 5b, 5c) dessinée sur la partie de la carrosserie (3), et d'autres parties de la voiture qui sont touchées par le dommage de la partie de la carrosserie (3) tel que défini par la au moins une zone endommagée (4a, 4b, 4c, 5a, 5b, 5c) dessinée sur la partie de la carrosserie (3).

8. Le système (1) de l'une des revendications 1 à 7, dans lequel l'interface utilisateur (100) est en outre configurée pour recevoir de l'utilisateur des sélections d'un modèle de voiture et d'au moins une partie de la carrosserie (3) du modèle de voiture; et le module estimateur (12) est en outre configuré pour générer l'estimation en fonction de la partie de la carrosserie (3) du modèle de voiture.

9. Procédé mis en œuvre par ordinateur pour déterminer une estimation des dommages causés par une collision à une voiture, le procédé comprenant l'affichage dans une interface utilisateur (100) d'une partie de la carrosserie (3) de la voiture, dans lequel le procédé comprend en outre :
recevoir d'un utilisateur par l'intermédiaire de l'interface utilisateur (100) une entrée pour définir sur la partie de la carrosserie (3) un contour d'au moins une zone endommagée (4a, 4b, 4c, 5a, 5b, 5c) ;
dessiner la au moins une zone endommagée (4a, 4b, 4c, 5a, 5b, 5c) sur la partie de carrosserie (3) selon le contour défini,
générer, par un module estimateur (12), pour l'utilisateur, une estimation du temps de réparation, sur la base de la au moins une zone endommagée (4a, 4b, 4c, 5a, 5b, 5c) dessinée sur la partie de carrosserie (3), en utilisant des caractéristiques de la partie de carrosserie (3) déterminées à partir d'une base de données (14), y compris l'accessibilité à la réparation de la partie de carrosserie (3),
déterminer, par le module estimateur (12), au moins une probabilité qu'au moins une autre pièce de voiture ait été endommagée par la collision, en se basant sur des données stockées, dans lequel, si une autre pièce de voiture respective est située à proximité de la au moins une zone endommagée (4a, 4b, 4c, 5a, 5b, 5c), la probabilité que la autre partie de la voiture soit endommagée est calculée en fonction de la distance relative de la autre partie de la voiture, du matériau et de l'épaisseur de la partie de la carrosserie et du niveau d'impact dans la au moins une zone endommagée (4a, 4b, 4c, 5a, 5b, 5c),
déterminer, par le module estimateur (12), les éléments de travail ou les opérations de réparation des dommages dus à la collision sur la base des caractéristiques de la partie de la carrosserie(3) et de la au moins une probabilité de la au moins une autre partie de voiture, le module estimateur (12) affichant dans une section d'opérations requises (R) d'une zone d'opérations (106) de l'interface utilisateur (100) les éléments de travail ou les opérations requis pour remplacer et/ou réparer la au moins une zone endommagée (4a, 4b, 4c, 5a, 5b, 5c) et au moins une autre pièce de la voiture pour laquelle la probabilité a été déterminée comme étant égale ou supérieure à un seuil d'endommagement supérieur défini, et affichant dans une section d'opérations proposées (P) de la zone d'opérations (106) les éléments de travail ou les opérations requises pour remplacer et/ou réparer au moins une autre pièce de la voiture pour laquelle la probabilité est inférieure au seuil d'endommagement supérieur défini, mais supérieure à un seuil d'endommagement inférieur, et
le module estimateur (12) reçoit de l'utilisateur les sélections des éléments de travail ou des opérations de la section d'opérations requises (R) et de la section d'opérations proposées (P) qui sont incluses dans l'estimation du temps de réparation.

10. Le procédé selon la revendication 9, dans lequel le procédé comprend en outre la fourniture dans l'interface utilisateur (100) d'un outil de dessin (108, 108') qui permet à l'utilisateur de dessiner le contour de la au moins une zone endommagée (4a, 4b, 4c, 5a, 5b, 5c) sur la partie de la carrosserie (3).

11. Le procédé de l'une des revendications 9 ou 10, dans lequel le procédé comprend en outre la réception de la part de l'utilisateur d'une image de la partie de la carrosserie (3), et la détection du contour de la au moins une zone endommagée (4a, 4b, 4c, 5a, 5b, 5c) à partir de l'image de la partie de la carrosserie (3).

12. Le procédé de l'une des revendications 9 à 11, dans lequel le procédé comprend en outre la réception par l'interface utilisateur (100) d'instructions de positionnement de la part de l'utilisateur ; et le positionnement de la au moins une zone endommagée (4a, 4b, 4c, 5a, 5b, 5c) sur la partie de la carrosserie (3) en réponse aux instructions de positionnement.

13. Le procédé de l'une des revendications 9 à 12, dans lequel le procédé comprend en outre la réception de la part de l'utilisateur par l'interface utilisateur (100) d'une indication du niveau d'impact (L, M, H) pour la au moins une zone endommagée (4a, 4b, 4c, 5a, 5b, 5c) dessinée sur la partie de la carrosserie (3) ; et la génération de l'estimation en fonction du niveau d'impact (L, M, H) pour la au moins une zone endommagée (4a, 4b, 4c, 5a, 5b, 5c).

14. Le procédé de l'une des revendications 9 à 13, dans lequel le procédé comprend en outre la détermination d'autres parties de la voiture qui sont impactées par un dommage de la partie de la carrosserie (3) tel que défini par la au moins une zone endommagée (4a, 4b, 4c, 5a, 5b, 5c) sur la partie de la carrosserie (3) ; et la prise en compte d'une réparation de ces autres parties dans la génération de l'estimation.

15. Le procédé de l'une des revendications 9 à 14, dans lequel le procédé comprend en outre la génération pour l'utilisateur de procédures de réparation des dommages de collision, sur la base des caractéristiques de la partie de carrosserie (3), d'un dommage de la partie de carrosserie (3) tel que défini par la au moins une zone endommagée (4a, 4b, 4c, 5a, 5b, 5c) dessinée sur la partie de la carrosserie (3), et d'autres parties de la voiture qui sont impactées par le dommage de la partie de la carrosserie (3) tel que défini par la au moins une zone endommagée (4a, 4b, 4c, 5a, 5b, 5c) dessinée sur la partie de la carrosserie (3).

16. Le procédé de l'une des revendications 9 à 15, dans lequel le procédé comprend en outre la réception de l'utilisateur par l'interface utilisateur (100) de sélections d'un modèle de voiture et d'au moins une partie de carrosserie (3) du modèle de voiture ; et la génération de l'estimation en fonction de la partie de carrosserie (3) du modèle de voiture.

17. Produit programme d'ordinateur comprenant un support lisible par ordinateur sur lequel est stocké un code de programme d'ordinateur qui ordonne à un système informatique (1) d'estimer les dommages causés par une collision à une voiture de :
afficher dans une interface utilisateur (100) une partie de la carrosserie (3) de la voiture;
recevoir d'un utilisateur par l'intermédiaire de l'interface utilisateur (100) une entrée pour définir sur la partie de la carrosserie (3) un contour d'au moins une zone endommagée (4a, 4b, 4c, 5a, 5b, 5c) ;
dessiner la au moins une zone endommagée (4a, 4b, 4c, 5a, 5b, 5c) sur la partie de carrosserie (3) selon le contour défini,
générer, par un module estimateur (12), pour l'utilisateur, une estimation du temps de réparation, sur la base de la au moins une zone endommagée (4a, 4b, 4c, 5a, 5b, 5c) dessinée sur la partie de carrosserie (3), en utilisant des caractéristiques de la partie de carrosserie (3) déterminées à partir d'une base de données (14), y compris l'accessibilité à la réparation de la partie de carrosserie (3),
déterminer, par le module estimateur (12), au moins une probabilité qu'au moins une autre pièce de voiture ait été endommagée par la collision, en se basant sur des données stockées, dans lequel, si une autre pièce de voiture respective est située à proximité de la au moins une zone endommagée (4a, 4b, 4c, 5a, 5b, 5c), la probabilité que la autre partie de la voiture soit endommagée est calculée en fonction de la distance relative de la autre partie de la voiture, du matériau et de l'épaisseur de la partie de la carrosserie et du niveau d'impact dans la au moins une zone endommagée (4a, 4b, 4c, 5a, 5b, 5c),
déterminer, par le module estimateur (12), les éléments de travail ou les opérations nécessaires à la réparation des dommages causés par la collision sur la base des caractéristiques de la partie de la carrosserie (3) et de la au moins une probabilité de la au moins une autre partie de la voiture, le module estimateur (12) affichant dans une section d'opérations requises (R) d'une zone d'opérations (106) de l'interface utilisateur (100) les éléments de travail ou les opérations nécessaires au remplacement et/ou à la réparation de la au moins une zone endommagée (4a, 4b, 4c, 5a, 5b, 5c) et au moins une autre pièce de voiture pour laquelle la probabilité a été déterminée comme étant égale ou supérieure à un niveau de seuil de dommage supérieur défini, et affichant dans une section d'opérations proposées (P) de la zone d'opérations (106) les éléments de travail ou les opérations requises pour remplacer et/ou réparer au moins une autre pièce de voiture pour laquelle la probabilité est inférieure au niveau de seuil de dommage supérieur défini, mais supérieure à un niveau de seuil de dommage inférieur, et
recevoir, par le module estimateur (12), de la part de l'utilisateur des sélections des éléments de travail ou des opérations dans la section d'opérations requises (R) et dans la section d'opérations proposées (P) qui sont incluses dans l'estimation du temps de réparation.

18. Le produit programme d'ordinateur de la revendication 17, dans lequel le code de programme d'ordinateur ordonne en outre au système informatique (1) d'exécuter un procédé selon l'une des revendications 9 à 16.
